# EUROPÄISCHE PATENTSCHRIFT

(11) **EP 2 122 131 B1**
(45) Veröffentlichungstag und Bekanntmachung des Hinweises auf die Patenterteilung: **02.02.2011**
(21) Anmeldenummer: 08707655.0
(22) Anmeldetag: 11.02.2008
(51) Int. Cl.: F01N 3/021, F01N 3/28

(54) **ABGASFÜHRENDE VORRICHTUNG, INSBESONDERE ABGASREINIGUNGSVORRICHTUNG, SOWIE VERFAHREN ZUR HERSTELLUNG EINER ABGASFÜHRENDEN VORRICHTUNG**
EXHAUST GAS CONDUCTING DEVICE, PARTICULARLY EXHAUST GAS PURIFICATION DEVICE, AND METHOD FOR THE PRODUCTION OF AN EXHAUST GAS CONDUCTING DEVICE
DISPOSITIF D'ÉVACUATION DES GAZ D'ÉCHAPPEMENT, EN PARTICULIER DISPOSITIF D'ÉPURATION DE GAZ D'ÉCHAPPEMENT, ET PROCÉDÉ DE PRODUCTION D'UN DISPOSITIF D'ÉVACUATION DES GAZ D'ÉCHAPPEMENT

(30) Priorität: 12.02.2007 DE 102007006788
(43) Veröffentlichungstag der Anmeldung: 25.11.2009
(73) Patentinhaber: EMCON Technologies Germany (Augsburg) GmbH, 86154 Augsburg (DE)
(72) Erfinder: GRIGORJEW, Waldemar, 86156 Augsburg (DE); KELLER, Stefan, 86405 Meitingen (DE); LACHER, Christian, 86152 Augsburg (DE)
(74) Vertreter: Prinz & Partner
(86) Internationale Anmeldenummer: PCT/EP2008/001024
(87) Internationale Veröffentlichungsnummer: WO 2008/098727

(56) Entgegenhaltungen:
- EP-A- 0 128 653
- EP-A- 1 482 140
- US-A- 4 049 388
- US-A- 4 218 422
- US-A- 4 425 304
- US-A- 4 581 206

## Beschreibung

Die Erfindung betrifft eine abgasführende Vorrichtung, insbesondere eine Abgasreinigungsvorrichtung nach dem Oberbegriff des Anpruchs 1. Weiterhin betrifft die Erfindung ein Verfahren zur Herstellung einer abgasführenden Vorrichtung.

In den Abgasanlagen von Kraftfahrzeugen werden immer bessere Abgasreinigungsvorrichtungen eingesetzt. Diese umfassen Einleger in Form von Substraten aus keramischem Material, die als mechanische Filter wirken (z.B. Partikelfilter) oder die mit einem katalytischen Material beschichtet sind, um katalytisch das Abgas zu reinigen. Die Einleger sollen möglichst platzsparend untergebracht sein; zum Teil sollen sie auch strömungsmäßig sehr nahe aneinander liegen, u.a. um geringere Wärmeverluste zwischen den Einlegern zu haben. Aus diesem Grund werden mehrere Einleger mit geringem axialen Abstand zueinander in einem gemeinsamen Außengehäuse untergebracht. Der axiale Abstand ermöglicht dabei z.B. die Anordnung eines Sensors zwischen den Einlegern. Im Bereich zwischen den Einlegern ist allerdings das Gehäuse dem heißen Abgas direkt ausgesetzt, weshalb eine Isolierung nötig ist, um eine thermische Beschädigung des Gehäuses oder eine übermäßige Wärmeabstrahlung an die Umgebung zu verhindern. Ein Beispiel für eine solche Vorrichtung zeigt die US-A-4 581 206.

Die Einleger werden für gewöhnlich durch radiale Klemmung im Außengehäuse gehalten, wobei eine das Substrat umgebende Lagermatte komprimiert wird und auf diese Weise eine Haltekraft auf das Substrat ausübt. Dazu wird das Außengehäuse mit einem auf das jeweilige Substrat sowie die Lagermatte abgestimmten Durchmesser gefertigt. Da die Abmessungen von Substraten und Lagermatten herstellungsbedingten Toleranzen unterworfen sind, ist es bislang üblich, jeden Einleger in einem separaten Gehäuseteil zu klemmen, das z.B. durch Kalibrieren mit Druckbacken auf den dem jeweiligen Einleger entsprechenden Durchmesser gebracht wird. Anschließend werden beide Gehäuseteile in ihrem späteren Verbindungsbereich auf einen einheitlichen Durchmesser kalibriert und unter Zwischenschaltung eines auf diesen Durchmesser abgestimmten Isolationsrings miteinander verschweißt.

Demgegenüber schafft die Erfindung eine abgasführende Vorrichtung bzw. ein Verfahren zu deren Herstellung, die bzw. das einfacher und damit kostengünstiger ist.

Gemäß einem ersten Aspekt der Erfindung ist hierzu eine abgasführende Vorrichtung, insbesondere eine Abgasreinigungsvorrichtung, vorgesehen, mit einem länglichen Gehäuse, zwei im Gehäuse in Axialrichtung hintereinander angeordneten Einlegern und einem einzigen Isolationsring, der in Axialrichtung zwischen den Einlegern angeordnet und in Umfangsrichtung unterbrochen ausgeführt ist. Der Isolationsring ist also geschlitzt, d.h. er weist im wesentlichen eine C-Form auf, wodurch er sich problemlos an unterschiedliche Gehäusedurchmesser anpassen kann, die sich aufgrund herstellungsbedingter Toleranzen der Einleger ergeben können. Ein aufwendiges Kalibrieren des Gehäuses auf einen vorgegebenen Durchmesser des Distanzrings, wie es aus dem Stand der Technik bekannt ist, ist daher nicht nötig. Zudem läßt sich das Gehäuse einteilig ausführen und mit eingesetztem Isolationsring als ganzes in seinem Durchmesser verringern (etwa durch Kalibrieren), da sich der Isolationsring dem sich ändernden Durchmesser anpaßt. Daher zeichnet sich die erfindungsgemäße Vorrichtung durch eine besonders einfache und somit kostengünstige Herstellung aus.

Vorzugsweise hat der Isolationsring einen in etwa U-förmigen Querschnitt mit an den freien Enden nach außen abgewinkelten Schenkeln. Dabei sind die parallelen Abschnitte der Schenkel den Stirnseiten der Einleger zugewandt und können zu deren axialer Abstützung dienen, während die abgewinkelten Enden am Gehäuse anliegen.

Der Isolationsring kann eine in Umfangsrichtung umlaufende Nut aufweisen, die insbesondere durch die parallelen Schenkel begrenzt wird.

In der Nut ist bevorzugt ein Isolationsmaterial, z.B. in Form einer Isolationsmatte, angeordnet. Dadurch wird eine besonders gute Isolierung des Gehäuses im Bereich zwischen den Einlegern erreicht.

Gemäß einer Ausführungsform der Erfindung ist zumindest vor einer ersten Inbetriebnahme der Vorrichtung ein Distanzring vorgesehen, der im Bereich des Isolationsrings angeordnet ist. Dieser Distanzring dient der Einstellung des vorgesehenen axialen Abstands zwischen den Einlegern bei der Herstellung der abgasführenden Vorrichtung.

Da der Distanzring nach Fertigstellung der Vorrichtung, wenn eine ausreichende Klemmung der Einleger im Gehäuse erreicht ist, nicht mehr benötigt wird, kann er aus einem im Betrieb der Vorrichtung nicht temperaturbeständigen Material sein, das bei Inbetriebnahme der Vorrichtung verbrennt bzw. vergast.

Vorzugsweise ist der Distanzring aus einem thermoplastischen Kunststoff, insbesondere aus Polyethylen. Ein solcher Distanzring läßt sich leicht verformen, wenn der Durchmesser des Gehäuses während der Herstellung der Vorrichtung verringert wird, weshalb er im Gegensatz zum metallenen Isolationsring als ununterbrochener Ring ausgeführt sein kann. Ein weiterer Vorteil der Verwendung eines Polyethylen-Distanzrings besteht in dessen rückstandsfreier Verbrennung.

Der Distanzring ist bevorzugt radial innerhalb des Isolationsrings angeordnet und stützt sich an diesem ab.

Gemäß einer alternativen Ausführungsform der Erfindung dient der Isolationsring gleichzeitig als Distanzhalter, d.h. auf einen separaten Distanzring kann verzichtet werden. Auf diese Weise läßt sich ein Bauteil einsparen und dadurch die Herstellungskosten weiter senken.

In einer Weiterbildung der Erfindung ist vorgesehen, daß sich die Einleger über elastische Elemente, insbesondere Metallfaserringe, am Isolationsring abstützen. Eine solche Ausgestaltung bietet den Vorteil, daß Lagermatten mit geringerer Haltekraft oder sogar Isolationsmatten ohne Haltekraft verwendet werden können, da die elastischen Elemente für eine zusätzliche radiale sowie axiale Abstützung der Einleger bzw. Substrate sorgen.

Vorzugsweise ist im Bereich der Unterbrechung des Isolationsrings eine Durchführung für einen Sensor vorgesehen. Natürlich können längs des Umfangs des Isolationsrings weitere Durchführungen für weitere Sensoren vorgesehen sein, vorzugsweise in Form von Ausnehmungen im Isolationsring.

Um den Isolationsring insbesondere in Axialrichtung zu fixieren, ist er bevorzugt mit dem Gehäuse verbunden, z.B. von außen punktuell verschweißt.

Gemäß einem zweiten Aspekt der Erfindung ist ein Verfahren zur Herstellung einer abgasführenden Vorrichtung vorgesehen, die zwei in einem gemeinsamen Gehäuse angeordnete Einleger hat und insbesondere wie oben beschrieben ausgebildet ist. Das Verfahren weist folgende Schritte auf:
a) ein das Gehäuse bildender Mantel wird gefertigt,
b) ein Einleger wird zusammen mit zumindest einem Isolationsring stirnseitig in den Mantel eingeschoben,
c) der zweite Einleger wird stirnseitig in den Mantel eingeschoben, und
d) der Querschnitt des Mantels wird verringert.

Das erfindungsgemäße Verfahren ermöglicht also die Herstellung einer abgasführenden Vorrichtung mit zwei Einlegern in einem gemeinsamen, ungeteilten Gehäuse, wobei sich der Durchmesser des Isolationsrings an den individuellen Querschnitt (bzw. im üblichen Falle von Einlegern mit kreisrundem Querschnitt an den individuellen Durchmesser) des Mantels anpaßt. Daher ist das erfindungsgemäße Verfahren besonders einfach und kostengünstig.

Gemäß einer ersten Verfahrensvariante wird der Querschnitt bzw. Durchmesser des Mantels durch Kalibrieren verringert. Unter Kalibrieren ist hierbei ein Verfahren zu verstehen, bei dem ein rohrförmiger Mantel von vergleichsweise großem Durchmesser durch mehrere längs seines Umfangs angeordnete Druckbacken beaufschlagt und radial einwärts verformt wird, wodurch sein Durchmesser verringert wird.

Eine weitere Verfahrensvariante zum Verringern des Querschnitts des Mantels sieht ein sogenanntes Wickeln vor. Bei diesem werden die Einleger stirnseitig in ein offenes, vorgebogenes Mantelblech eingeschoben, das anschließend eng um die Einleger gewickelt und durch Verschweißen bzw. Verlöten seiner überlappenden Kanten geschlossen wird.

Ein alternatives Verfahren zur Herstellung einer abgasführenden Vorrichtung sieht die folgenden Schritte vor:
a) ein das Gehäuse bildender Mantel mit einem vorgegebenen Enddurchmesser wird gefertigt,
b) ein Einleger wird zusammen mit zumindest einem Isolationsring durch Stopfen stirnseitig in den Mantel eingeschoben,
c) der zweite Einleger wird durch Stopfen stirnseitig in den Mantel eingeschoben.

Unter Stopfen ist hierbei ein (an sich bekanntes) Verfahren zu verstehen, bei dem der Mantel als Rohr mit dem zu erzielenden endgültigen Durchmesser gefertigt wird. Der bzw. die Einleger, die gegenüber diesem Durchmesser ein gewisses Übermaß aufweisen, werden unter Komprimierung ihrer Lagermatten stirnseitig in den Mantel eingeschoben. Auch hierbei ist es wichtig, daß sich der Durchmesser des Isolationsrings an den Durchmesser des Mantels anpassen kann, der herstellungsbedingt Toleranzen aufweist.

Bei sämtlichen genannten Verfahrensvarianten werden vorzugsweise die beiden Einleger nacheinander von unterschiedlichen Stirnseiten aus in den Mantel eingeschoben, wobei der Isolationsring gemeinsam mit einem der beiden Einleger in den Mantel eingebracht wird.

Alternativ ist es auch denkbar, das gesamte "Paket" aus beiden Einlegern mit dazwischen angeordnetem Isolationsring von einer Stirnseite einzuschieben.

Weitere Merkmale und Vorteile der Erfindung ergeben sich aus der nachfolgenden Beschreibung mehrerer bevorzugter Ausführungsformen anhand der beigefügten Zeichnungen. In diesen zeigen:
- Figur 1 eine Draufsicht auf eine abgasführende Vorrichtung gemäß einer ersten Ausführungsform der Erfindung, teilweise geschnitten;
- Figur 2 eine Perspektivansicht eines Isolationsrings mit Distanzring, wie er in der Vorrichtung gemäß Figur 1 eingesetzt wird;
- die Figuren 3 a bis d schematisch das erfindungsgemäßen Verfahren zur Herstellung der abgasführenden Vorrichtung nach Figur 1;
- Figur 4 eine Seitenansicht einer abgasführenden Vorrichtung gemäß einer zweiten Ausführungsform der Erfindung, teilweise geschnitten;
- Figur 5 eine teilweise geschnittene Perspektivansicht der Vorrichtung aus Figur 4 während ihrer Herstellung; und
- Figur 6 eine perspektivische Detailansicht der Vorrichtung aus Figur 4.

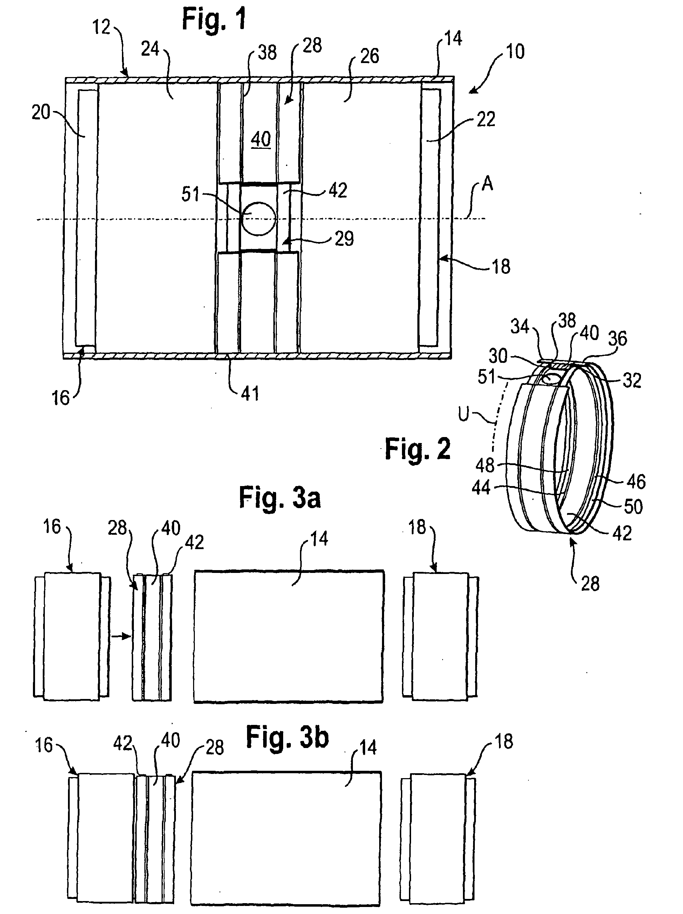

Figur 1 zeigt eine abgasführende Vorrichtung 10 gemäß einer ersten Ausführungsform der Erfindung. Diese hat ein längliches Gehäuse 12, das umfangsseitig durch einen einteiligen, geschlossenen zylindrischen Mantel 14 gebildet ist. An den Mantel 14 sind an den stirnseitigen Enden ein Einlaß- und ein Auslaßtrichter angeschweißt oder -gelötet, auf deren Darstellung hier jedoch verzichtet wurde. Im Gehäuse 12 sind in Axialrichtung A hintereinander zwei Einleger 16, 18 angeordnet, die jeweils ein Substrat 20 bzw. 22 sowie eine in Umfangsrichtung um das Substrat 20, 22 gewickelte Lagermatte 24 bzw. 26 aufweisen. Die Einleger 16, 18 sind im Gehäuse 12, genauer im Mantel 14, geklemmt, wobei durch Komprimierung der Lagermatten 24, 26 eine Haltekraft erzeugt wird.

Zwischen den Einlegern 16, 18, die einen gewissen axialen Abstand voneinander haben, ist ein Isolationsring 28 aus Metall vorgesehen, der in Umfangsrichtung U unterbrochen ausgeführt, also geschlitzt ist. Die Unterbrechung ist in den Figuren mit 29 bezeichnet. Der Isolationsring 28 schützt den Mantel 14 im Bereich zwischen den Einlegern 16, 18 vor einem direkten Kontakt mit heißem Abgas. Der Isolationsring 28 hat, wie insbesondere aus Figur 2 ersichtlich ist, einen in etwa U-förmigen Querschnitt mit zwei im wesentlichen parallelen Schenkeln 30, 32, deren freie Enden 34 bzw. 36 um etwa 90° nach außen abgewinkelt sind und am Gehäuse 12 bzw. am Mantel 14 anliegen. Zwischen den parallelen Schenkeln 30, 32 ist eine in Umfangsrichtung U umlaufende Nut 38 gebildet, in der ein Isolationsmaterial 40, hier in Form einer Isolationsmatte, aufgenommen ist. Der Isolationsring 28 ist an der in Figur 1 mit 41 bezeichneten Stelle punktuell mit dem Gehäuse 12 bzw. mit dem Mantel 14 verschweißt.

In dem in den Figuren gezeigten Zustand vor einer ersten Inbetriebnahme der Vorrichtung 10 ist innerhalb des Isolationsrings 28 ein Distanzring 42 aus einem thermoplastischen Kunststoff, insbesondere Polyethylen, angeordnet. Damit der Distanzring 42 radial innen am Isolationsring 28 flächig anliegt, weist er ebenfalls einen U-förmigen Querschnitt mit parallelen Schenkeln 44, 46 auf, deren freie Enden 48 bzw. 50 um 90° nach außen abgewinkelt sind. Die freien Enden 48 und 50 des Distanzrings 42 sind etwas kürzer als die freien Enden 34, 36 des Isolationsrings 28. Im Gegensatz zum Isolationsring 28 ist der Distanzring 42 als ununterbrochener Ring ausgeführt, hat jedoch im Bereich der Unterbrechung 29 des Isolationsrings 28 eine kreisförmige Ausnehmung 51, die als Durchführung für einen Sensor dient.

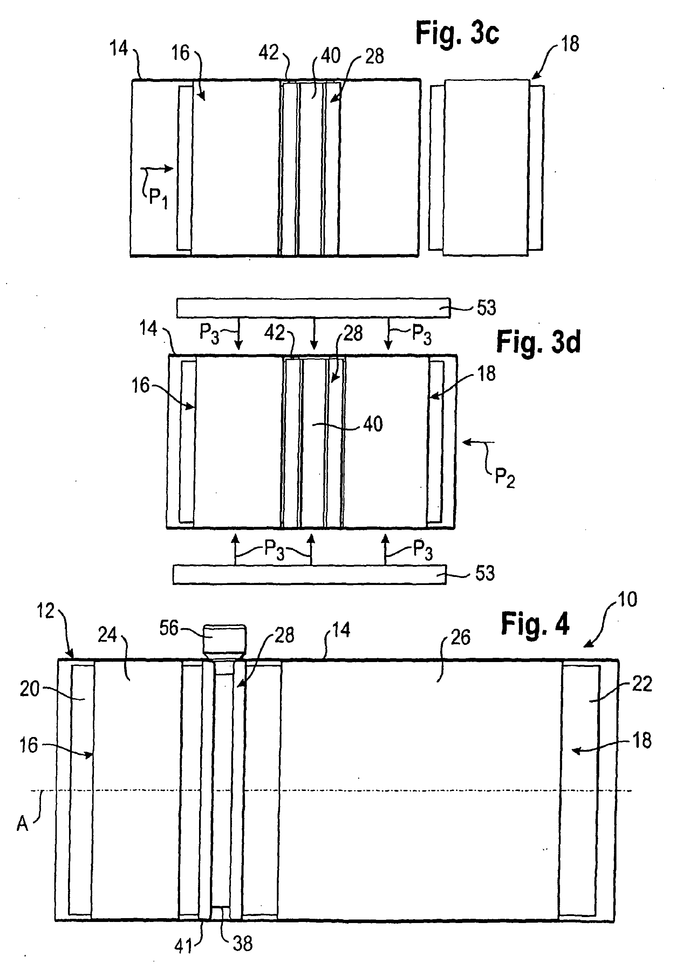

Anhand der Figuren 3 a bis d wird im folgenden ein Verfahren zur Herstellung der abgasführenden Vorrichtung 10 beschrieben. Zunächst wird der Mantel 14 als offenes oder geschlossenes Rohr gefertigt, das gegenüber einem zu erzielenden Enddurchmesser (bzw. Endquerschnitt) einen vergrößerten Durchmesser (bzw. Querschnitt) aufweist. Der Isolationsring 28 wird samt dem Isolationsmaterial 40 sowie dem in seinem Inneren angeordneten Distanzring 42 stirnseitig auf den Einleger 16 aufgesteckt (Figur 3a), wobei der Schenkel 44 des Distanzrings 42 an der Stirnseite des Substrats 20 in Anlage kommt (Figur 3b). Anschließend werden, wie durch den Pfeil P₁ in Figur 3c angedeutet, der Einleger 16 und der Isolationsring 28 (inklusive des Isolationsmaterials 40 und des Distanzrings 42) stirnseitig in den Mantel 14 eingeschoben. In einem nächsten Schritt wird der zweite Einleger 18 von der gegenüberliegenden Stirnseite in den Mantel 14 eingeschoben, bis die dem Isolationsring 28 zugewandte Stirnseite des Substrats 22 am Schenkel 46 des Distanzrings 42 zu liegen kommt (Pfeil P₂ in Figur 3d). Aufgrund des vergleichsweise großen Durchmessers des Mantels 14 lassen sich die Einleger 16, 18 leicht einschieben. In einem letzten Verfahrensschritt, angedeutet durch die Pfeile P₃, wird der Querschnitt des Mantel 14 auf den gewünschten Endquerschnitt verringert, beispielsweise durch Kalibrieren mit Druckbacken 53 oder Wickeln. Dabei paßt sich der Durchmesser des Isolationsrings 28 dank der Unterbrechung 29 an jeden Durchmesser des Mantels 14 an, der sich aufgrund der individuell verwendeten Einleger 16, 18 ergibt. Zudem kann sich der Isolationsring 28 an gewisse Durchmesserunterschiede zwischen den beiden Einlegern 16, 18 anpassen. Da sich der geschlossene Distanzring 42 vergleichsweise leicht verformen läßt, paßt auch er sich dem Durchmesser des Mantels 14 an.

Das Material des Distanzrings 42 (hier Polyethylen) ist im späteren Betrieb der Vorrichtung 10 nicht temperaturbeständig und verbrennt bei Inbetriebnahme der Vorrichtung 10 rückstandsfrei. Der Distanzring 42 dient somit lediglich dazu, bei der Herstellung der Vorrichtung 10, also bevor die Einleger 16, 18 durch radiale Klemmung im Gehäuse 12 (bzw. im Mantel 14) gehalten werden, deren axialen Abstand voneinander zu gewährleisten.

Ein alternatives Herstellungsverfahren sieht vor, daß der Mantel 14 bereits mit dem vorgegebenen, zu erzielenden Enddurchmesser gefertigt wird und die Einleger 16, 18 (etwa unter Verwendung trichterförmiger Hilfsmittel) stirnseitig in den Mantel 14 gestopft werden. In diesem Fall entfällt natürlich die Durchmesser- bzw. Querschnittsverringerung des Mantels im letzten Schritt.

Die Figuren 4 bis 6 zeigen eine Vorrichtung 10 gemäß einer zweiten Ausführungsform der Erfindung, wobei im folgenden gleiche oder funktionsgleiche Bauteile gleiche Bezugszeichen tragen und lediglich auf die Unterschiede zur bisher beschriebenen ersten Ausführungsform eingegangen wird.

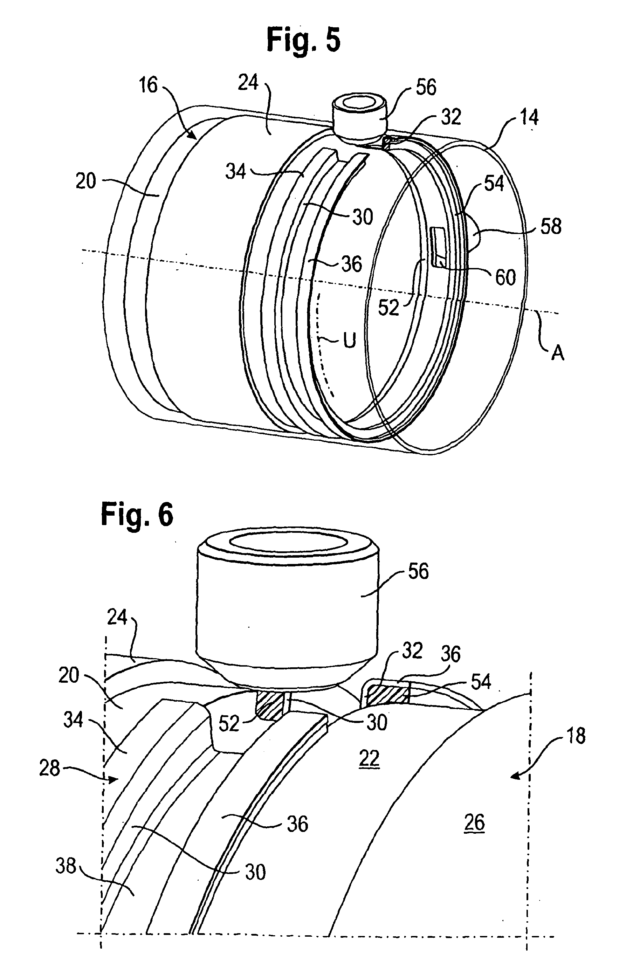

Bei der Vorrichtung 10 der Figuren 4 bis 6 dient der Isolationsring 28 bei der Herstellung gleichzeitig als Distanzhalter, weshalb auf den separaten Distanzring 42 verzichtet werden kann. Auch auf ein in der Nut 38 angeordnetes Isolationsmaterial wurde bei dieser Ausführungsform verzichtet. Wie insbesondere aus den Figuren 5 und 6 hervorgeht, stützen sich die Einleger 16, 18 bzw. die Substrate 20, 22 über zwei elastische Elemente 52, 54 in Form von Metallfaserringen mit L-förmigem Querschnitt am Isolationsring 28 ab. Dabei liegt jedes der beiden elastischen Elemente 52, 54 an einem Schenkel 30 bzw. 32 und dessen abgewinkeltem freien Ende 34 bzw. 36 an. Die Abstützung am Isolationsring 28 über die elastischen Elemente 52, 54 erfolgt sowohl in axialer als auch in radialer Richtung und ermöglicht die Verwendung von Lagermatten 24, 26 mit geringerer Haltekraft, die kostengünstiger sein oder bessere Umwelteigenschaften haben können. In diesem Zusammenhang ist sogar der Einsatz von Isolationsmatten an Stelle der Lagermatten 24, 26 denkbar.

Im Bereich der Unterbrechung 29 des Isolationsrings 28 ist bei der gezeigten Ausführungsform eine Buchse 56 angeordnet, die als Durchführung für einen Sensor dient. Eine weitere Buchse 58 für einen Sensor ist in Umfangsrichtung U um etwa 90° versetzt am Gehäuse 12 bzw. am Mantel 14 vorgesehen. In diesem Bereich weist der Isolationsring 28 eine längliche Ausnehmung 60 auf.

Wieder ist der Isolationsring mit dem Gehäuse 12 bzw. dem Mantel 14 von außen punktuell verschweißt (angedeutet durch das Bezugszeichen 41 in Figur 4), hier in dem der Unterbrechung 29 gegenüberliegenden Bereich des Isolationsrings 28. Dabei beeinträchtigt die punktuelle Verschweißung des Isolationsrings 28 mit dem Mantel 14 die Anpassungsfähigkeit des Isolationsrings 28 an unterschiedliche Manteldurchmesser nicht.

## Patentansprüche

1. Abgasführende Vorrichtung, insbesondere Abgasreinigungsvorrichtung, mit
einem länglichen Gehäuse (12),
zwei im Gehäuse (12) in Axialrichtung (A) hintereinander angeordneten Einlegern (16, 18) **gekennzeichnet durch**
einen einzigen Isolationsring (28), der in Axialrichtung (A) zwischen den Einlegern (16, 18) angeordnet und in Umfangsrichtung (U) unterbrochen ausgeführt ist.

2. Vorrichtung nach Anspruch 1, **dadurch gekennzeichnet, daß** der Isolationsring (28) einen in etwa U-förmigen Querschnitt mit an den freien Enden (34, 36) nach außen abgewinkelten Schenkeln (30, 32) aufweist.

3. Vorrichtung nach Anspruch 1 oder 2, **dadurch gekennzeichnet, daß** der Isolationsring (28) eine in Umfangsrichtung (U) umlaufende Nut (38) aufweist.

4. Vorrichtung nach Anspruch 3, **dadurch gekennzeichnet, daß** in der Nut (38) ein Isolationsmaterial (40), insbesondere eine Isolationsmatte, angeordnet ist.

5. Vorrichtung nach einem der vorhergehenden Ansprüche, **dadurch gekennzeichnet, daß** zumindest vor einer ersten Inbetriebnahme der Vorrichtung (10) ein Distanzring (42) vorgesehen ist, der im Bereich des Isolationsrings (28) angeordnet ist.

6. Vorrichtung nach Anspruch 5, **dadurch gekennzeichnet, daß** der Distanzring (42) aus einem im Betrieb der Vorrichtung nicht temperaturbeständigen Material ist.

7. Vorrichtung nach Anspruch 5 oder 6, **dadurch gekennzeichnet, daß** der Distanzring (42) aus einem thermoplastischen Kunststoff, insbesondere Polyethylen, ist.

8. Vorrichtung nach einem der Ansprüche 5 bis 7, **dadurch gekennzeichnet, daß** der Distanzring (42) radial innerhalb des Isolationsrings (28) angeordnet ist.

9. Vorrichtung nach einem der Ansprüche 1 bis 5, **dadurch gekennzeichnet, daß** der Isolationsring (28).gleichzeitig als Distanzhalter dient.

10. Vorrichtung nach einem der vorhergehenden Ansprüche, **dadurch gekennzeichnet, daß** sich die Einleger (16, 18) über elastische Elemente (52, 54), insbesondere Metallfaserringe, am Isolationsring (28) abstützen.

11. Vorrichtung nach einem der vorhergehenden Ansprüche, **dadurch gekennzeichnet, daß** im Bereich der Unterbrechung (29) des Isolationsrings (28) eine Durchführung für einen Sensor vorgesehen ist.

12. Verfahren zur Herstellung einer abgasführenden Vorrichtung nach einem der vorhergehenden Ansprüche, die zwei in einem gemeinsamen Gehäuse (12) angeordnete Einleger (16, 18) hat, **gekennzeichnet durch** folgende Schritte:
a) ein das Gehäuse (12) bildender Mantel (14) wird gefertigt,
b) ein Einleger (16, 18) wird zusammen mit zumindest einem Isolationsring (28) stirnseitig in den Mantel (14) eingeschoben,
c) der zweite Einleger (18, 16) wird stirnseitig in den Mantel (14) eingeschoben und
d) der Querschnitt des Mantels (14) wird verringert.

13. Verfahren nach Anspruch 12, **dadurch gekennzeichnet, daß** der Querschnitt des Mantels (14) durch Kalibrieren verringert wird.

14. Verfahren nach Anspruch 13, **dadurch gekennzeichnet, daß** der Querschnitt des Mantels (14) durch Wickeln verringert wird.

15. Verfahren zur Herstellung einer abgasführenden Vorrichtung, nach einem der vorhergehenden Ansprüche, die zwei in einem gemeinsamen Gehäuse (12) angeordnete Einleger (16, 18) hat, **gekennzeichnet durch** folgende Schritte:
a) ein das Gehäuse (12) bildender Mantel (14) mit einem vorgegebenen Enddurchmesser wird gefertigt,
b) ein Einleger (16, 18) wird zusammen mit zumindest einem Isolationsring (28) durch Stopfen stirnseitig in den Mantel (14) eingeschoben und
c) der zweite Einleger (18, 16) wird **durch** Stopfen stirnseitig in den Mantel (14) eingeschoben.

## Claims

1. An exhaust gas carrying device, in particular an exhaust gas purification device, comprising
an oblong housing (12),
two inserts (16, 18) arranged one behind the other in the axial direction (A) in the housing (12), **characterized by**
one single insulation ring (28) arranged between the inserts (16, 18) in the axial direction (A) and configured to be interrupted in the peripheral direction (U).

2. The device according to claim 1, **characterized in that** the insulation ring (28) has a roughly U-shaped cross-section with limbs (30, 32) that are angled outwards at the free ends (34, 36).

3. The device according to claim 1 or 2, **characterized in that** the insulation ring (28) includes a continuously surrounding groove (38) in the peripheral direction (U).

4. The device according to claim 3, **characterized in that** an insulating material (40), in particular an insulating mat, is arranged in the groove (38).

5. The device according to any of the preceding claims, **characterized in that**, at least prior to a first start-up of the device (10), a spacer ring (42) is provided that is arranged in the region of the insulation ring (28).

6. The device according to claim 5, **characterized in that** the spacer ring (42) is made from a material that is not temperature-resistant in operation of the device.

7. The device according to claim 5 or 6, **characterized in that** the spacer ring (42) is made from a thermoplastic material, in particular polyethylene.

8. The device according to any of claims 5 to 7, **characterized in that** the spacer ring (42) is arranged radially inside the insulation ring (28).

9. The device according to any of claims 1 to 5, **characterized in that** the insulation ring (28) serves as a spacer at the same time.

10. The device according to any of the preceding claims, **characterized in that** the inserts (16, 18) are supported at the insulation ring (28) by means of elastic elements (52, 54), in particular metal fiber rings.

11. The device according to any of the preceding claims, **characterized in that** a lead-through for a sensor is provided in the region of the interruption (29) of the insulation ring (28).

12. A method of manufacturing an exhaust gas carrying device according to any of the preceding claims, which has two inserts (16, 18) arranged in a shared housing (12), **characterized by** the steps of:
(a) producing a jacket (14) that forms the housing (12);
(b) inserting an insert (16, 18) together with at least one insulation ring (28) into the jacket (14) from an end face;
(c) inserting the second insert (18, 16) into the jacket (14) from an end face; and
(d) reducing the cross-section of the jacket (14).

13. The method according to claim 12, **characterized in that** the cross-section of the jacket (14) is reduced by sizing.

14. The method according to claim 13, **characterized in that** the cross-section of the jacket (14) is reduced by wrapping.

15. A method of manufacturing an exhaust gas carrying device according to any of the preceding claims, which has two inserts (16, 18) arranged in a shared housing (12), **characterized by** the steps of:
(a) producing a jacket (14) that has a predefined final diameter and forms the housing (12);
(b) inserting an insert (16, 18) together with at least one insulation ring (28) into the jacket (14) from an end face by stuffing; and
(c) inserting the second insert (18, 16) into the jacket (14) from an end face by stuffing.

## Revendications

1. Dispositif d'évacuation de gaz d'échappement, en particulier dispositif de purification de gaz d'échappement, comportant
un boîtier (12) allongé,
deux pièces d'insert (16, 18) agencés l'une derrière l'autre en direction axiale (A) dans le boîtier (12), **caractérisé par**
une seule bague d'isolation (28) qui est agencée en direction axiale (A) entre les pièces d'insert (16, 18) et qui est réalisée interrompue en direction périphérique (U).

2. Dispositif selon la revendication 1, **caractérisé en ce que** la bague d'isolation (28) présente une section transversale approximativement en forme de U avec des branches (30, 32) coudées vers l'extérieur aux extrémités libres (34,36).

3. Dispositif selon la revendication 1 ou 2, **caractérisé en ce que** la bague d'isolation (28) présente une gorge (38) périphérique s'étendant en direction périphérique (U).

4. Dispositif selon la revendication 3, **caractérisé en ce que** dans la gorge (38) est agencé un matériau isolant (40), en particulier une nappe isolante.

5. Dispositif selon l'une des revendications précédentes, **caractérisé en ce qu'**au moins avant une première mise en service du dispositif (10), il est prévu une bague d'écartement (42) qui est agencée dans la zone de la bague d'isolation (28).

6. Dispositif selon la revendication 5, **caractérisé en ce que** la bague d'écartement (42) est en un matériau qui n'est pas résistant à la température pendant le fonctionnement du dispositif.

7. Dispositif selon la revendication 5 ou 6, **caractérisé en ce que** la bague d'écartement (42) est en une matière thermoplastique, en particulier en polyéthylène.

8. Dispositif selon l'une des revendications 5 à 7, **caractérisé en ce que** la bague d'écartement (42) est agencée radialement à l'intérieur de la bague d'isolation (28).

9. Dispositif selon l'une des revendications 1 à 5, **caractérisé en ce que** la bague d'isolation (28) sert en même temps d'écarteur.

10. Dispositif selon l'une des revendications précédentes, **caractérisé en ce que** les pièces d'insert (16, 18) prennent appui sur la bague d'isolation (28) par l'intermédiaire d'éléments (52, 54) élastiques, en particulier de bagues en fibres métalliques.

11. Dispositif selon l'une des revendications précédentes, **caractérisé en ce que** dans la zone de l'interruption (29) de la bague d'isolation (28) est prévu un passage pour un capteur.

12. Procédé de fabrication d'un dispositif d'évacuation de gaz d'échappement selon l'une des revendications précédentes, qui possède deux pièces d'insert (16, 18) agencées dans un boîtier (12) commun, **caractérisé par** les étapes suivantes :
a) une enveloppe (14) constituant le boîtier (12) est réalisée,
b) une pièce d'insert (16, 18) est introduite dans l'enveloppe (14) sur la face frontale conjointement avec au moins une bague d'isolation (28),
c) la deuxième pièce d'insert (18, 16) est introduite dans l'enveloppe (14) sur la face frontale, et
d) la section transversale de l'enveloppe (14) est réduite.

13. Procédé selon la revendication 12, **caractérisé en ce que** la section transversale de l'enveloppe (14) est réduite par calibrage.

14. Procédé selon la revendication 13, **caractérisé en ce que** la section transversale de l'enveloppe (14) est réduite par enroulement.

15. Procédé de fabrication d'un dispositif d'évacuation de gaz d'échappement selon l'une des revendications précédentes, qui possède deux pièces d'insert (16, 18) agencées dans un boîtier (12) commun, **caractérisé par** les étapes suivantes :
a) une enveloppe (14) constituant le boîtier (12) est réalisée'avec un diamètre terminal prédéterminé,
b) une pièce d'insert (16, 18) est introduite par bourrage dans l'enveloppe (14) sur la face frontale conjointement avec au moins une bague d'isolation (28), et
c) la deuxième pièce d'insert (18, 16) est introduite par bourrage dans l'enveloppe (14) sur la face frontale
